# EUROPÄISCHE PATENTSCHRIFT

(11) **EP 0 741 439 B1**
(45) Veröffentlichungstag und Bekanntmachung des Hinweises auf die Patenterteilung: **26.08.1998**
(21) Anmeldenummer: 96107044.8
(22) Anmeldetag: 04.05.1996
(51) Int. Cl.: H02G 3/08, H02G 3/18

(54) **Unterflurgehäuse für die Aufnahme elektrotechnischer Geräte**
Underfloor housing for electronical apparatus
Boîtier de sol pour appareillages électroniques

(30) Priorität: 04.05.1995 DE 19516421; 03.05.1996 DE 19617827
(43) Veröffentlichungstag der Anmeldung: 06.11.1996
(73) Patentinhaber: gabo Systemtechnik GmbH, 94327 Bogen (DE)
(72) Erfinder: Bauer, Peter, 94357 Konzell (DE); Helf, Walter, 94315 Straubing (DE); Lederer, Roland, 93049 Regensburg (DE)

(56) Entgegenhaltungen:
- DE-A- 4 307 260
- DE-U- 9 410 777
- DE-U- 9 419 491
- DE-U-29 502 938

## Beschreibung

Die Erfindung bezieht sich auf ein Unterflurgehäuse aus Kunststoff für die Aufnahme elektrotechnischer Geräte oder dergl., insbesondere fernmeldetechnischer Einrichtungen, das einen Boden besitzt mit Kabeleinführungen für Kabel oder dergl. und mit einem Deckel aus Kunststoff verschließbar ist.

Oberirdisch aufgestellte Kabelverzweigerkästen (KVZ) und sonstige Kästen sollen, wegen der zunehmenden Verkabelung im industriellen und privaten Bereich und insbesondere wegen der Beschädigungsgefahr und aus Platzgründen, mehr und mehr durch Unterflurgehäuse ersetzt werden. Dies insbesondere auch deshalb, weil oberirdisch aufgestellte KVZ-Gehäuse Abdichtungsprobleme, wegen der immer mehr eingebauten feuchtigkeitsempfindlichen elektronischen Bauteile, aufwerfen und auch durch Verkehrsmittel immer öfters beschädigt werden, was einen hohen Reparatur- bzw. Ersatzaufwand erfordert.

Solche Unterflurgehäuse sind bereits aus Beton vorgeschlagen worden. Aus dem DE-GM 9402158 geht ein Unterflurgehäuse hervor, das mit einem Einsatzbehälter aus Kunststoff mit einem Metalldeckel für die Aufnahme der elektrischen Geräte versehen ist, die in dem Unterflurgehäuse untergebracht sind. Mit dem DE-GM 941077 wurde außerdem ein Deckelsystem für einen solchen Kunststoffbehälter vorgeschlagen, das jedoch ebenfalls noch mit verschiedenen Nachteilen behaftet ist, da dieser Behälter erst in ein stabiles Gehäuse eingesetzt werden muß, das im Erdreich eingesetzt wird. So ist auch hier der notwendige Feuchtigkeitsschutz immer noch problematisch. Ähnliches gilt für den mechanischen Schutz der in diese Gehäuse einzubauenden Geräte. Weiter ist ein Unterflurgehäuse aus glasfaserverstärktem Kunststoff für die Aufnahme elektrischer Bauteile in dem DE-GM 9419491 beschrieben. Ein solcher Behälter aus glasfaserverstärktem Kunststoff ist aber für den vorgesehenen Einsatz zu teuer. Die DE-PS 43 07 260 offenbart ein begehbares wannenförmiges Kabelkanalelement mit Deckel, das aus Kunststoff gefertigt ist und für den Einsatz an Bahndämmen vorgesehen ist. Ein Unterflurgehäuse aus Kunststoff für die Aufnahme elektrotechnischer Geräte mit Kabeleinführungen für Kabel mit einem Deckel, mit Auflageflächen für eine Deckplatte mit einem Dichtsitz für eine Dichtung des Deckels ist aus DE-U-295 02 938 bekannt.

Hier setzt die Erfindung ein.

Der Erfindung, wie sie im Anspruch 1 beschrieben ist, liegt die Aufgabe zugrunde, ein Unterflurgehäuse aus Kunststoff zu schaffen, daß die elektrischen Bauteile direkt, also ohne zusätzlichen Behälter, aufnehmen kann, ein geringes Gewicht aufweist, feuchtigkeitsdicht ist und wirtschaftlich herstellbar ist.

Der erfindungsgemäß ausgebildete Unterflurbehälter weist folgende Vorteile auf: Ein besonderer Behälter mit Deckel für die elektrischen Bauteile ist nicht mehr erforderlich, da diese Bauteile direkt in eine Aufnahme am Boden des Gehäuses eingesetzt werden, 2. der notwendige Schutz vor mechanischen Belastungen und Feuchtigkeit ist gewährleistet, 3. Das Unterflurgehäuse ist einfach montierbar, 4. durch geringes Gewicht ist auf der Baustelle kein Kran mehr zum Einsetzen des Unterflurgehäuses in das Erdreich erforderlich, 5. das Unterflurgehäuse ist außerdem äußerst wirtschaftlich im Spritzgußverfahren herstellbar und, falls notwendig, durch Zwischenstücke, erweiterbar.

Die Erfindung ist nachstehend anhand eines in den Abbildungen dargestellten Ausführungsbeispieles näher erläutert.

Es zeigt
Fig. 1 eine perspektivische Darstellung des Unterflurgehäuses gem. der Erfindung,
Fig. 2 eine Detaildarstellung der Einzelheit "A",
Fig. 3 eine Detaildarstellung der Einzelheit "B" und
Fig. 4 eine Ausführungsvariante

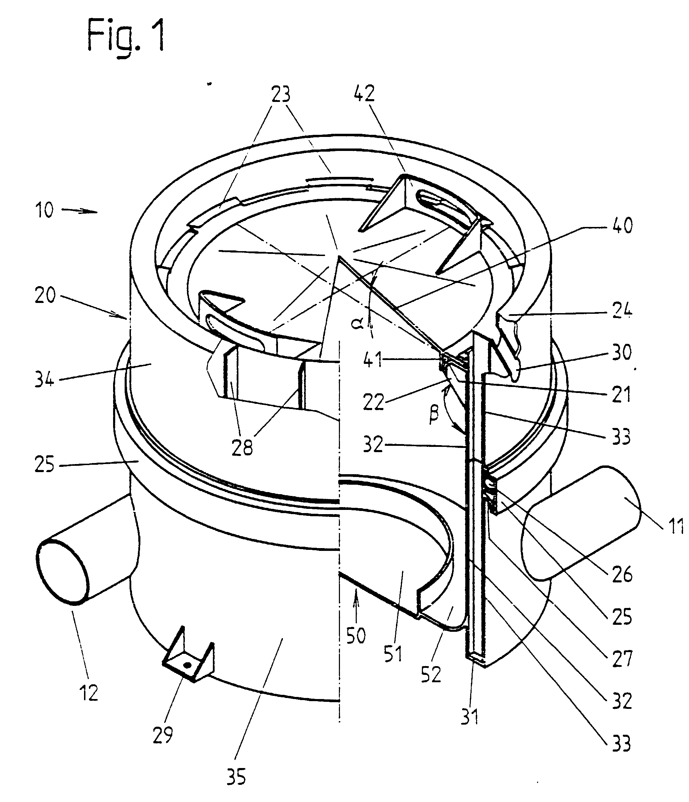

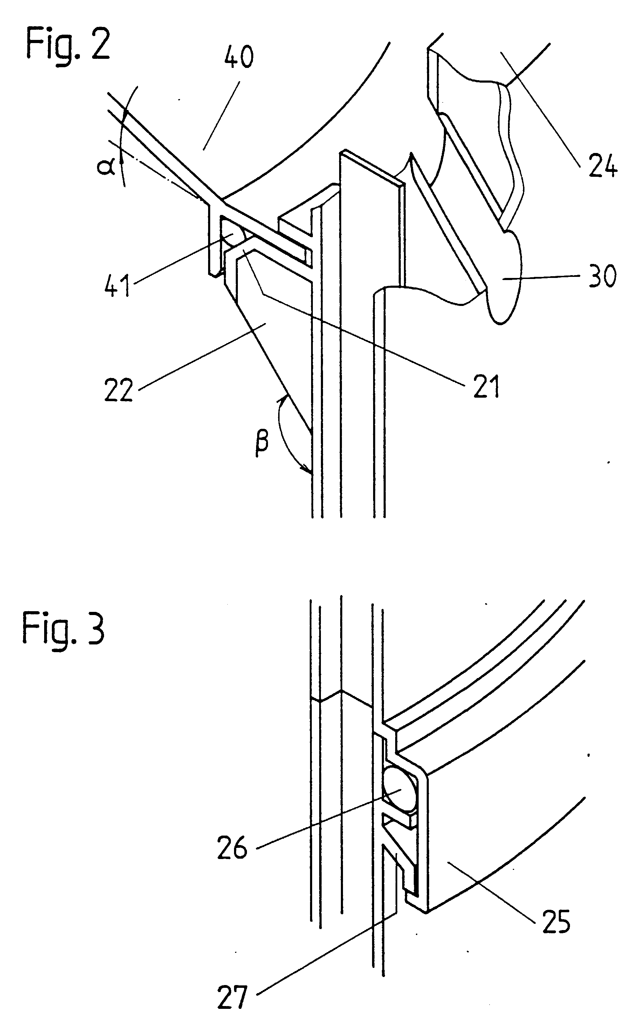

Der in den Figuren 1 bis 4 dargestellte Unterflurbehälter 10 ist anhand eines zylindrisch ausgebildeten Ausführungsbeispieles gem. Fig. 1 bis 3 erläutert.

Der Unterflurbehälter 10 besteht im wesentlichen aus einem Mantel 20, der wiederum aus zwei Teilen, einem oberen Mantelteil 34 und einem unteren Mantelteil 35 besteht. Beide Mantelteile 34 und 35 sind zweischalig aufgebaut, d.h. sie bestehen aus einem inneren Zylinder 32 und einem äußeren Zylinder 33, die beide durch Längsrippen 28 miteinander verbunden und auf Abstand gehalten sind. Beide Zylinder 32 und 33 sind oben und unten mit einer Auflagefläche 24 für eine Abdeckplatte oder dergl., bzw. einer Fußfläche 31 verschlossen. Die Auflagefläche 24 überragt dabei den kegelförmig ausgebildeten Deckel des Unterflurbehälters 10, während die Fußfläche 31 unterhalb des Bodens 50 des unteren Mantelteiles 35 verläuft.

Im Bereich des oberen Mantelteiles 34 ist ein Verschluß 23, beispielsweise ein Drehverschluß, für den Deckel 40 angeordnet, der diesen beim Eindrehen gegen einen Dichtsitz 21 mit dem Dichtelement 41 preßt und somit den Innenraum des Unterflurbehälters 10 gegen das umgebende Erdreich abdichtet. Der Dichtsitz 21 stützt sich zur Verbesserung seiner Stabilität an der Wand des inneren Zylinders 32 mit mehreren Stegen 22 ab, die einen Winkel β > 90° mit der Zylinderwand einschließen. Der Dichtsitz 21, der Anlagebereich dieses Dichtelementes am Dekkel 40 und/oder das Dichtelement 41 sind zur Verbesserung des Gleitfähigkeit beim Einsetzen und Abnehmen des Deckels 40 mit einer Gleitschicht versehen. Der Deckel ist vorzugsweise kegelförmig mit einem Flankenwinkel α >5° ausgebildet, um zu verhindern, daß evtl. auftretendes Kondenswasser auf die elektrischen Einrichtungen in der Aufnahme 51 des Unterflurbehälters tropfen kann. Auf seiner Oberseite weist der Deckel 40 einen oder mehrere Griffe zur einfacheren Handhabung auf.

Zur Ableitung von Oberflächenwasser sind oberhalb des Drehverschlusses 23 für den Deckel 40 mehrere Entwässerungsbohrungen 30 durch den inneren und äußeren Zylinder 32,33 geführt.

Das obere und das untere Mantelteil 34 bzw. 35 sind miteinander dicht mittels eines ringförmigen Verbindungsstückes 25 unter Zwischenschaltung einer umlaufenden Dichtung 26 durch Rastmittel 27 verbunden. Das Verbindungsstück 25 ist vorteilhafterweise an einem der beiden Mantelteile 34,35 angeformt.

Der Boden 50 des unteren Mantelteils 35 weist eine Aufnahme 51 für die elektrischen Geräte oder dergl. auf und grenzt diese gegen einen äußeren Ringraum 52 für die Kabel ab. Für das Ein- und Wegführen der Kabel sind eine oder mehrere Kabeleinführungsöffnungen 11 und 12 vorgesehen, in diesen Ringraum 52 münden. An der Außenseite des unteren Mantelteils 35 sind im Bereich der Fußfläche 31 Anker 29 angebracht oder angeformt über die der Unterflurbehälter im Untergrund befestigt werden kann.

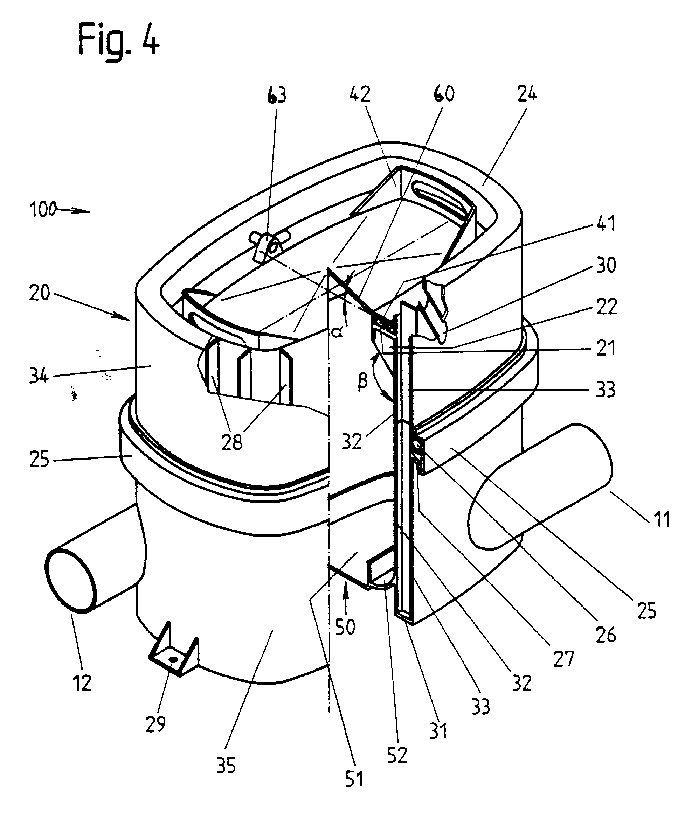

Der Unterflurbehälter gem. der Erfindung ist weder an die zylindrische Form, noch an die Aufnahme elektrischer Geräte, wie beispielsweise Relais, Schalter, elektronische Bauteile für die Nachrichtentechnik usw. beschränkt. Es können auch andere Formen vorgesehen werden, wie in Fig. 4 dargestellt. Anstelle von elektrischen Einrichtungen können beispielsweise auch sonstige Installationen eingesetzt werden. Statt eines zweiteiligen Unterflurbehälters 10 bzw. 100, bestehend aus einem oberen und einen unteren Mantelteil 34,35 ist es z.B. auch möglich, zusätzliche Zwischenstücke einzusetzen, die es ermöglichen, die Höhe des Unterflurbehälters zu variieren, falls die vorgesehene Normhöhe für die erforderlichen Einsätze nicht ausreichen sollte. Die Verbindung der einzelnen Mantelteile erfolgt dabei in gleicher Weise wie bei einem zweiteiligen Unterflurbehälter mittels eines abgedichteten Verbindungsstückes 25 und entsprechenden Rastmitteln 27.

Die in Fig. 4 dargestellte Ausführungsvariante 100 des Unterflurgehäuses weist eine von der in den Fig. 1 bis 3 dargestellten zylindrischen Form abweichende Form auf. Die dadurch bedingte Änderung des Drehverschlusses 23 wird beispielsweise durch einen etwa pyramidenförmig ausgebildeten Deckel 60 mit Verriegelungsmechanik 43 gelöst.

Eventuell in dem Unterflurgehäuse auftretende Wärme, die durch darin enthaltene elektrische Geräte verursacht wird, kann auf verschiedene Weise elektrisch oder mechanisch, abgeleitet werden. Beispielsweise mittels der Verbindung des Unterflurgehäuses mit einer im Erdreich versenkten Metallplatte, Ausfüllen des Raumes zwischen dem inneren und äußeren Mantel 32/33 mit gut wärmeleitenden Stoffen, Ausnutzen verschiedener physikalischer Effekte usw.

### UNTERFLURGEHÄUSE FÜR DIE AUFNAHME ELEKTROTECHNISCHER GERÄTE

### BEZUGSZEICHENLISTE

- 10: Unterflurbehälter
- 11: Kabeleinführungsöffnung
- 12: Kabeleinführungsöffnung
- 20: Mantel
- 21: Dichtsitz
- 22: Stege
- 23: Drehverschluß
- 24: Auflagefläche
- 25: Verbindungsstück
- 26: Dichtung
- 27: Rastmittel
- 28: Längsrippen
- 29: Anker
- 30: Entwässerungsbohrungen
- 31: Fußfläche
- 32: innerer Zylinder
- 33: äußerer Zylinder
- 34: oberes Mantelteil
- 35: unteres Mantelteil
- 40: Deckel
- 41: Dichtelement
- 42: Griffe
- 50: Boden
- 51: Aufnahmebereich
- 52: Ringraum
- 60: Deckel
- 63: Verriegelungsmechanik
- 100: Unterflurbehälter (Ausführungsvariante)
- α: Flankenwinkel Deckel
- β: Stegwinkel Dichtsitz

## Patentansprüche

1. In die Erde versenkbares Unterflurgehäuse (10) aus Kunststoff für die Aufnahme elektrotechnischer Geräte oder dergl., insbesondere fernmeldetechnischer Einrichtungen, das einen Boden (50) besitzt, mit Kabeleinführungen (11,12) für Kabel oder dergl. und mit einem Deckel (40) aus Kunststoff verschließbar ist mit einem senkrechten Mantel (20), der an seinem oberen Ende eine Auflage (24) für eine Deckplatte besitzt, wobei die Auflage (24) den Deckel (40) überragt, mit einer Fußfläche (31) unterhalb des Bodens des Mantels (20), mit einem Dichtsitz (21) für eine Dichtung (41) des Deckels (40) im Inneren des Mantels (20) im oberen Drittel desselben, und mit mindestens einem unterhalb der Auflage (24) für den Deckel (40) vorgesehenen Entwässerungskanal (30) der durch den Mantel (20) geführt ist.

2. Unterflurgehäuse nach Anspruch 1, **dadurch gekennzeichnet**, daß der Mantel (20) aus einem inneren Zylinder (32) und einem äußeren Zylinder (33), die beide mittels senkrechter Streben (28) verbunden sind, besteht.

3. Unterflurgehäuse nach Anspruch 1 und 2, **dadurch gekennzeichnet**, daß der Mantel (20) aus einem oberen Mantelteil (34) und einem unteren Mantelteil (35) mit angeformten Boden (50) besteht und ein die Verbindungsstelle beider Mantelteile überlappendes ringförmiges Verbindungsstück (25) mit einer umlaufenden Dichtung (26) vorgesehen ist und beide Teile miteinander durch Rastelemente (27) verbunden sind.

4. Unterflurgehäuse nach Anspruch 1 bis 3, **dadurch gekennzeichnet**, daß ein Mantelteil mit zugehörigem Verbindungsstück, Rastelement und umlaufender Dichtung zwischen das obere Mantelteil (34) und das untere Mantelteil (35) eingefügt ist.

5. Unterflurgehäuse nach Anspruch 1 und einem der folgenden, **dadurch gekennzeichnet,** daß der Deckel (40) die Form eines Kegels mit einem Flankenwinkel ≥ 5° aufweist.

6. Unterflurgehäuse nach Anspruch 1 und einen der folgenden, **dadurch gekennzeichnet**, daß das obere Mantelteil (34) an seiner Innenseite einen Drehverschluß (23) für den Deckel (40) aufweist.

7. Unterflurgehäuse nach Anspruch 1 und einen der folgenden, **dadurch gekennzeichnet**, daß der Dichtsitz (21) durch mehrere vom inneren Zylinder (32) des oberen Mantelteils (34) ausgehende Stege (22), die mit dem inneren Zylinder einen Winkel β >90° einschließen, verstrebt ist.

8. Unterflurgehäuse nach Anspruch 1 und einen der folgenden, **dadurch gekennzeichnet**, daß etwa in der Mitte des Bodens (50) eine Aufnahme (51) für Bauelemente vorgesehen ist, die von einem ringförmigen Aufnahmebereich (52) für Kabel umgeben ist, in den mindestens eine Kabeleinführung (11) mündet.

9. Unterflurgehäuse nach Anspruch 1 und einen der folgenden, **dadurch gekennzeichnet**, daß im Bereich der Fußfläche (31) mehrere Anker (29) vorgesehen sind.

10. Unterflurgehäuse nach Anspruch 1 und einen der folgenden, **dadurch gekennzeichnet**, daß zwischen dem Dichtelement (41) und mindestens einer seiner Anlageflächen eine Gleitschicht vorgesehen ist.

11. Unterflurgehäuse nach Anspruch 1 und einen der folgenden, **dadurch gekennzeichnet**, daß das Dichtelement (41) mit einer Gleitschicht beschichtet ist.

12. Unterflurgehäuse nach Anspruch 1 und einen der folgenden, **dadurch gekennzeichnet**, daß der Drehverschluß (23) und der Dichtsitz (21) in einer Ebene angeordnet sind.

13. Unterflurgehäuse nach Anspruch 1 und einen der folgenden, **dadurch gekennzeichnet**, daß das Dichtelement (41) in einer Kammer angeordnet ist, deren eine Wand zwischen dem Dichtelement und den Entwässerungskanälen vorgesehen ist.

14. Unterflurgehäuse nach Anspruch 1 und einen der folgenden, **dadurch gekennzeichnet**, daß die Grundfläche des Mantels (20) zylindrisch ausgebildet ist.

15. Unterflurgehäuse nach Anspruch 1 und einen der folgenden, **dadurch gekennzeichnet**, daß die Grundfläche des Mantels (20) etwa oval ausgebildet ist.

## Claims

1. Underground housing structure (10) sunk into the ground, made from plastic, to accommodate electrical devices or similar, particularly telecommunications devices, which has a base surface (50) with cable entrance ducts (11, 12) for cables or similar and which can be locked with a cover (40) made from plastic, with a vertical jacket (20) which at its upper end has a bearing structure (24) for a cover plate, such that the bearing structure (24) projects beyond the cover (40), with a footing (31) below the bottom of the jacket (20) with a seal base (21) for a seal (41) of the cover (40) in the inside of the jacket (20) in the upper third of the jacket, and with at least one drainage channel (30) provided under the bearing structure (24) for the cover (40), which channel proceeds through the jacket (20).

2. Underground housing structure according to claim 1, characterised in that the jacket (20) consists of an inner cylinder (32) and an outer cylinder (33), with the two cylinders being connected by means of vertical bracing elements (28).

3. Underground housing structure according to claims 1 and 2, characterised in that the jacket (20) consists of an upper part (34) and a lower part (35) with a shaped bottom (50), such that a ring-shaped connector piece (25) overlapping the connection point between the two parts of the jacket is provided with a circumferential seal (26), and that the two parts are connected to each other by means of snap-on fasteners (27).

4. Underground housing structure according to claims 1 to 3, characterised in that a jacket element with associated connector piece, snap-on fastener and circumferential seal is inserted between the upper part of the jacket (34) and the lower part of the jacket (35).

5. Underground housing structure according to claim 1 and one of the following claims, characterised in that the cover (40) is in the form of a cone with a side angle of greater than or equal to 5 degrees.

6. Underground housing structure according to claim 1 and one of the following claims, characterised in that the upper part of the jacket (34) has on its inside a turn-lock fastening (23) for the cover (40).

7. Underground housing structure according to claim 1 and one of the following claims, characterised in that the seal seat (21) is braced with several gussets (22) proceeding from the inner cylinder (32) of the upper part of the jacket (34), which form an angle β > 90° with the inner cylinder.

8. Underground housing structure according to claim 1 and one of the following claims, characterised in that approximately in the middle of the bottom (50) there is a structure (51) to accommodate structural elements, which structure is surrounded by an annular area (52) to accommodate cables, into which area at least once cable entrance duct (11) emerges.

9. Underground housing structure according to claim 1 and one of the following claims, characterised in that a number of anchoring elements (29) are provided in the region of the footing (31).

10. Underground housing according to claim 1 and one of the following claims, characterised in that between the sealing element (41) and at least one of its bearing surfaces a sliding surface is provided.

11. Underground housing structure according to claim 1 and one of the following claims, characterised in that the sealing element (41) is coated with a sliding surface.

12. Underground housing structure according to claim 1 and one of the following claims, characterised in that the turn-lock fastening (23) and the seal seating (21) are arranged in the same plane.

13. Underground housing structure according to claim 1 and one of the following claims, characterised in that the sealing element (41) is arranged in a chamber, one of whose walls is between the sealing element and the drainage channels.

14. Underground housing structure according to claim 1 and one of the following claims, characterised in that the base of the jacket (20) is cylindrical in form.

15. Underground housing structure according to claim 1 and one of the following claims, characterised in that the base of the jacket (20) is approximately oval in form.

## Revendications

1. Un boîtier souterrain en plastique (10) pouvant être enfoncé dans le sol qui permet de loger des appareils électroniques ou des installations similaires, notamment de télécommunication; il est pourvu d'un fond (50), d'entrées de câbles (11,12) pour des câbles ou autres, peut être verrouillé avec un couvercle en plastique (40), avec son manteau vertical (20) pourvu d'une surface d'appui (24) pour un couvercle dans son extrémité supérieure, et qui dépasse du boîtier (40); le boîtier souterrain a une embase (31) au-dessous du fond du manteau (20), avec un logement d'étanchéité (21) pour l'étoupage (41) du couvercle (40) dans l'intérieur du manteau (20) dans le tiers supérieur de ce dernier, et avec au moins un canal pour l'évacuation de l'eau (30) prévu pour le couvercle (40), et qui traverse le manteau (20); ce canal se trouve au-dessous du réceptacle (24).

2. Boîtier souterrain selon spécifications 1, **caractérisé par le fait que** le manteau (20) consiste en un cylindre interne (32) et un cylindre externe (33), tous deux reliés par une nervure verticale (28).

3. Boîtier souterrain selon spécifications 1 et 2, **caractérisé par le fait que** le manteau (20) consiste en une enveloppe supérieure (34) et une enveloppe inférieure (35) avec un fond moulé (50) et un raccord annulaire (25) qui chevauche la jonction des deux enveloppes et muni d'un joint circulaire (26) ; les deux pièces sont reliées entre elles au moyen de crans d'arrêt (27).

4. Boîtier souterrain selon spécifications 1 à 3, **caractérisé par le fait que** l'enveloppe du manteau comprend un raccord, un cran d'arrêt et une garniture circulaire entre l'enveloppe supérieure (34) et l'enveloppe inférieure (35).

5. Boîtier souterrain selon spécifications 1 et un des points suivants, **caractérisé par le fait que** le couvercle (40) a la forme d'un cône avec un angle de pression > 5°.

6. Boîtier souterrain selon spécifications 1 et un des points suivants, **caractérisé par le fait que** l'enveloppe supérieure du manteau (34) possède sur sa face intérieure un verrouillage demi-tour (23) pour le couvercle (40).

7. Boîtier souterrain selon spécifications 1 et un des points suivants, **caractérisé par le fait que** le logement d'étanchéité (21) est entretoisé par plusieurs traverses (22) sortant du cylindre interne (32) de l'enveloppe supérieure (34), avec un angle > 90° avec le cylindre interne.

8. Boîtier souterrain selon spécifications 1 et un des points suivants, **caractérisé par le fait que** le réceptacle (51) situé approximativement au milieu du fond (50), débouche dans au moins une entrée de câble (11); ce réceptacle est destiné à recevoir des modules et est entouré d'une chambre circulaire (52) pour les câbles.

9. Boîtier souterrain selon spécifications 1 et un des points suivants, **caractérisé par le fait que** plusieurs pièces d'ancrage (29) sont placées au niveau de l'embase (31).

10. Boîtier souterrain selon spécifications 1 et un des points suivants, **caractérisé par le fait que** la zone entre l'étoupage (41) et au moins une de ses faces de départ doit recevoir une couche glissante.

11. Boîtier souterrain selon spécifications 1 et un des points suivants, **caractérisé par le fait que** l'étoupage (41) est revêtu d'une couche glissante.

12. Boîtier souterrain selon spécifications 1 et un des points suivants, **caractérisé par le fait que** le verrouillage demi-tour (23) et le logement d'étanchéité (21) sont tous les deux disposés en plan.

13. Boîtier souterrain selon spécifications 1 et un des points suivants, **caractérisé par le fait que** l'étoupage (41) est installé dans une chambre, où une paroi est prévue entre l'étoupage et les canaux d'évacuation de l'eau.

14. Boîtier souterrain selon spécifications 1 et un des points suivants, **caractérisé par le fait que** la base du manteau (20) est cylindrique.

15. Boîtier souterrain selon spécifications 1 et un des points suivants, **caractérisé par le fait que** la base du manteau (20) est de forme plutôt ovale.
